# EUROPEAN PATENT SPECIFICATION

(11) **EP 4 099 732 B1**
(45) Date of publication and mention of the grant of the patent: **06.05.2026**
(21) Application number: 21772412.9
(22) Date of filing: 01.03.2021
(51) Int. Cl.: H04W 4/24, H04W 8/20, H04M 1/725, H04M 15/00, H04M 17/00, H04L 12/14, H04M 1/72448, H04W 8/18

(54) **NETWORK ACCESS METHOD, ELECTRONIC DEVICE, AND CHIP**
NETZWERKZUGRIFFVERFAHREN, ELEKTRONISCHE VORRICHTUNG UND CHIP
PROCÉDÉ D'ACCÈS À DES RÉSEAUX, DISPOSITIF ÉLECTRONIQUE ET PUCE

(30) Priority: 20.03.2020 CN 202010202694
(43) Date of publication of application: 07.12.2022
(73) Proprietor: Huawei Technologies Co., Ltd., Shenzhen, Guangdong 518129, (CN)
(72) Inventor: LI, Yuanfeng, Shenzhen, Guangdong 518129 (CN)
(74) Representative: Goddar, Heinz J.
(86) International application number: PCT/CN2021/078534
(87) International publication number: WO 2021/185063

(56) References cited:
- EP-A1- 3 917 210
- WO-A1-2017/008386
- WO-A1-2019/218124
- CN-A- 107 948 949
- CN-A- 107 979 693
- CN-A- 108 282 771
- CN-A- 108 901 015
- CN-A- 109 660 666
- CN-A- 110 072 263
- CN-A- 110 072 263
- US-A1- 2019 297 477
- US-B1- 9 693 220

## Description

### TECHNICAL FIELD

This application relates to the field of terminal technologies, and in particular, to an internet access method, an electronic device, a computer-readable medium, and a computer program.

### BACKGROUND

Currently, a dual-card mobile phone can use only one subscriber identity module (subscriber identity module, SIM) card to provide an internet access service for a user at a same moment, and cannot distinguish between different applications. Specifically, in the dual-card mobile phone, the SIM card for providing the internet access service is a default internet access card that is set by the user based on user requirements. For example, a SIM card 1 is set from the SIM card 1 and the SIM card 2 by the user to provide the internet access service. All applications installed on the mobile phone perform data communication for internet access through a data service connection based on the SIM card 1. Data traffic generated when an application installed on the mobile phone accesses the internet for the user is data traffic of an account identified by an international mobile subscriber identity (international mobile subscriber identity, IMSI) of the SIM card 1.

An operator performs charging based on usage of the data traffic of the account identified by the IMSI of the SIM card 1 and a data package purchased by the user for the account identified by the IMSI of the SIM card 1. For example, if a package purchased by the user for the account identified by the IMSI of the SIM card 1 is a dedicated data package for an application of Tencent, the application of Tencent on the mobile phone accesses the internet by using the dedicated data traffic of the account identified by the IMSI of the SIM card 1, and applications other than the application of Tencent on the mobile phone access the internet by using general data traffic of the account identified by the IMSI of the SIM card 1. The operator separately charges usage of the dedicated data traffic and usage of the general data traffic of the account identified by the IMSI of the SIM card 1. When the usage of the dedicated data traffic of the account identified by the IMSI of the SIM card 1 does not exceed a dedicated data traffic limit specified in the dedicated data package, and the usage of the general data traffic does not exceed a general data traffic limit specified in the dedicated data package, charging is performed based on the dedicated data package per month. Generally, the dedicated data traffic limit in the dedicated data package is large, so that the usage of the dedicated data traffic does not exceed the dedicated data traffic limit. However, the general data traffic limit in the dedicated data package is small, or even is 0, and usage of general data traffic that exceeds the general data traffic limit is charged by the operator based on a traffic unit price. This is prone to result in an internet access fee beyond the dedicated data package.

Therefore, when the user purchases, for an account identified by an IMSI of the SIM card 2, a general data package or a dedicated data package (for example, a dedicated data package for an application of Alibaba) for an application other than the application of Tencent, before the application other than the application of Tencent is used, an operation may be performed on the mobile phone to set the SIM card 2 in the mobile phone as a default internet access card, so that the internet access fee can be reduced. When the user needs to use the application of Tencent, the user performs an operation on the mobile phone to set the SIM card 1 in the mobile phone as a default internet access card. This is prone to result in poor user experience.

WO 2019/218124 A1 describes a method for automatically switching SIM cards. In an electronic device, a first application and a second application are installed. A first SIM card and a second SIM card are pre-configured on the electronic device. The method comprises: the electronic device automatically determines the correspondence between an application and a SIM card is that the first application corresponds to the first SIM card, and the second application corresponds to the second SIM card, and switches to the second SIM card for carrying out data service if it is detected that a user enables the operation of the second application when carrying out data service by using the first SIM card. A data service package of the first SIM card is different from that of the second SIM card.
CN 107 948 949 A describes a network management method, comprising: detecting an application that the mobile terminal currently starts to use; using a first SIM card as a data traffic card for conducting network data interaction if the application currently started to use is a first application; and using a second SIM card as a data traffic card for conducting network data interaction if the application currently started to use is a second application.
CN 110 072 263 A describes a method for switching network cards. The method is applied to an electronic device provided with a first network card and a second network card, wherein the first network card is a default network card of the electronic device. The electronic device determines that a user starts a function of intelligently switching the network card; the electronic device activates the first network card and uses the first network card to transmit data services, and monitors the network state of the first network card in real time; and when the network state of the first network card satisfies a first preset condition, the electronic device disconnects the data service of the first network card, activates the second network card and uses the second network card to transmit the data service.
CN 108 901 015 A describes a terminal communication method. After the terminal can determine a first USIM card corresponding to a first application according to attribute information of the first application, communication data of the first application are transmitted through the first USIM card; corresponding USIM cards can be determined according to different applications to achieve communication data transmission.
US 2019/297477 A1 describes a user-interface displayed on an electronic device, wherein the user-interface corresponds to a settings page to select a SIM for automatically enabling a transfer. The user-interface includes options for selecting one of SIM A, SIM B, and SIM C for automatic enabling. The user can enable the option for selecting SIM B, wherein the SIM B is in active data session, and hence the SIM B has been selected. Only the SIM in active data session will be selected for automatic enabling. Upon selecting of SIM B, the transfer is automatically enabled for SIM A and SIM C, and a notification is provided, wherein the notification indicates that SIM B call waiting is turned ON and incoming calls of SIM A and SIM C will be forwarded to SIM B when SIM A and SIM C are out of reach. Thus, upon setting the option and in response to the detection of an invocation of an application from a group at a later time, the transfer of services from SIM A and SIM C to SIM B is automatically enabled. In one implementation, a user-input is requested prior to enabling the transfer of one or more services. To this end, a notification is provided on the electronic device upon providing the complete access requesting a user-input to enable the transfer for SIM A and SIM C.
US 2019/297477 A1 further describes that, , in response to reception of a message, complete access of the RF transceiver of the electronic device is provided to SIM B, so that SIM B will consume complete RF cycle for all services. Thereafter, the transfer of one or more services associated with at least one SIM to SIM B is enabled. A user selects SIMs for whom the service(s) will be transferred. SIM(s) whose services are not transferred would become non-reachable.

### SUMMARY

Embodiments of this application provide an internet access method, an electronic device, a computer-readable medium, and a computer program, so that the electronic device can use different SIM cards to perform data services for different applications. Therefore, when a user surfs the internet by using different applications installed on a same electronic device, data traffic generated by the different applications may be separately charged. In addition, the user does not need to switch a default internet access card. This helps reduce an internet access fee for the user, and also helps improve user experience.

According to a first aspect, an embodiment of this application provides an internet access method, applied to an electronic device. When a first application and a second application are installed on the electronic device, and a first subscriber identity module SIM card and a second SIM card are installed in the electronic device, the first application is associated with the first SIM card, the second application is associated with the second SIM card, and the first SIM card is a default internet access card. The method specifically includes: if a smart dual-card internet access function is disabled, when the first application runs, using the first SIM card to perform a data service, and when the second application runs, using the first SIM card to perform a data service; enabling the smart dual-card internet access function in response to a first operation; and if the smart dual-card internet access function is enabled, when the first application runs, using the first SIM card to perform a data service, and when the second application runs, using the second SIM card to perform a data service. The second application is set as an application that preferentially uses the second SIM card for internet access. When it is detected that the second SIM card is disconnected from a network, the method includes: When a network fault switchover mode of the second SIM card is set to a first option, automatically switching the second application to the first SIM card, and using the first SIM card to perform a data service when the second application runs; when the network fault switchover mode of the second SIM card is set to a second option, prompting a user that the second SIM card is disconnected from the network, and whether to switch the second application to the first SIM card; and when the network fault switchover mode is set to a third option, disconnecting the second application from the network.

In this embodiment of this application, the smart dual-card internet access function is added, so that when the smart dual-card internet access is enabled, if the first application is associated with the first SIM card, and the second application is associated with the second SIM card, the electronic device may use the first SIM card to perform a data service when the first application runs and use the second SIM card to perform a data service when the second application runs. Therefore, when a user surfs the internet by using different applications installed on a same electronic device, data traffic generated by the different applications may be separately charged. In addition, the user does not need to switch a default internet access card. This helps reduce an internet access fee for the user, and also helps improve user experience.

In a possible design, the first application is not set as an application that preferentially uses the second SIM card for internet access. The second application is set as an application that preferentially uses the second SIM card 2 for internet access. Therefore, it is convenient for the user to select, based on user requirements, a SIM card that is used to perform a data service when an application runs.

In a possible design, in response to a user operation of starting the second application, the user is prompted that the second application is set to preferentially use the second SIM card for internet access and whether to continue to switch to the second SIM card. In response to a user operation of agreeing to switch to the second SIM card, it is determined to use the second SIM card to perform the data service when the second application runs. This improves permission of the user to know, so that the user determines, based on user requirements, whether to use the second SIM card to perform the data service when the second application runs.

In a possible design, when a third application is further installed on the electronic device, the third application is not associated with the first SIM card and the second SIM card. If the smart dual-card internet access function is enabled, when the third application runs, the first SIM card is used to perform a data service. This avoids that if the smart dual-card internet access function is enabled, an application that is not associated with the first SIM card and the second SIM card cannot perform a data service.

It may be understood that, in some other embodiments, the third application is not associated with the first SIM card and the second SIM card. If the smart dual-card internet access function is enabled, when the third application runs, the first SIM card and the second SIM card are used to perform a data service. This reduces a fee generated when the third application accesses the internet.

In a possible design, the third application is not set as an application that preferentially uses the second SIM card for internet access.

In a possible design, if a default internet access card smart switching function is enabled, when it is detected that network signal strength of the second SIM card is greater than network signal strength of the first SIM card, the second SIM card is switched to a default internet access card. If the smart dual-card internet access function is enabled, when the third application runs, the third application is switched to the second SIM card to perform a data service. This ensures network quality of the default internet access card, and improves user experience of internet access.

In addition, in some other embodiments, when the default internet access card smart switching function is enabled, the electronic device may further switch the default internet access card to the second SIM card based on remaining data traffic in data packages of the first SIM card and the second SIM card. For example, when remaining general data traffic in a data package of the second SIM card is greater than remaining general data traffic in a data package of the first SIM card, the second SIM card is switched to the default internet access card. For another example, when usage of general data traffic of an account of the first SIM card exceeds a data package limit of the first SIM card, if usage of general data traffic of an account of the second SIM card does not exceed a data package limit of the second SIM card, the electronic device switches the second SIM card to the default internet access card. This reduces an internet access fee.

In a possible design, when it is detected that the network signal strength of the second SIM card is greater than the network signal strength of the first SIM card, the user is prompted whether to switch the default internet access card to the second SIM card. In response to a user operation of agreeing to switch the default internet access card to the second SIM card, the default internet access card is switched to the second SIM card. This improves permission of the user to know.

In a possible design, when a fourth application, a fifth application, and/or a sixth application are/is further installed on the electronic device, the fourth application is associated with the first SIM card, the fourth application is set as an application that preferentially uses the second SIM card for internet access, the fifth application is associated with the second SIM card, the fifth application is not set as an application that preferentially uses the second SIM card for internet access, the sixth application is not associated with the first SIM card and the second SIM card, and the sixth application is set as an application that preferentially uses the second SIM card for internet access. If the smart dual-card internet access function is enabled, when the fourth application runs, the second SIM card is used to perform a data service. When the fifth application runs, the first SIM card is used to perform a data service. When the sixth application runs, the second SIM card is used to perform a data service.

According to a second aspect, an embodiment of this application further provides an electronic device, including an application processor, a modem, a memory, and a subscriber identity module SIM card interface. The SIM card interface is connected to the first SIM card and the second SIM card. The first SIM card is a default internet access card. The memory stores program instructions. The application processor is configured to invoke the program instructions to perform the method according to the first aspect or any of the possible designs of the first aspect.

According to a third aspect, an embodiment of this application provides a computer storage medium. The computer storage medium stores program instructions. When the program instructions are run on an electronic device, the electronic device is enabled to perform the method according to the first aspects and the possible designs of the first aspect.

According to a fourth aspect, an embodiment of this application provides a computer program product. When the computer program product runs on an electronic device, the electronic device is enabled to implement the method according to the first aspect and the possible designs of the first aspect.

In addition, for technical effects brought by any possible design in the second aspect to the fourth aspect, refer to technical effects brought by different designs in the method part. Details are not described herein again.

### BRIEF DESCRIPTION OF DRAWINGS

FIG. 1 is a schematic diagram of an interface according to an embodiment of this application;
FIG. 2 is a schematic diagram of a hardware structure of an electronic device according to an embodiment of this application;
FIG. 3 is a schematic diagram of an application architecture according to an embodiment of this application;
FIG. 4A is a schematic diagram of another interface according to an embodiment of this application;
FIG. 4B is a schematic diagram of another interface according to an embodiment of this application;
FIG. 4C is a schematic diagram of another interface according to an embodiment of this application;
FIG. 4D is a schematic diagram of another interface according to an embodiment of this application;
FIG. 4E is a schematic diagram of another interface according to an embodiment of this application;
FIG. 5 is a schematic diagram of another interface according to an embodiment of this application;
FIG. 6 is a schematic flowchart of an internet access method according to an embodiment of this application;
FIG. 7 is a schematic diagram of a structure of an electronic device according to an embodiment of this application; and
FIG. 8 is a schematic diagram of a structure of another electronic device according to an embodiment of this application.

### DESCRIPTION OF EMBODIMENTS

It should be understood that "at least one" in embodiments of this application refers to one or more. "Multiple" refers to two or more than two. "And/or" describes an association relationship between associated objects, and indicates that three relationships may exist. For example, A and/or B may represent the following three cases: Only A exists, both A and B exist, and only B exists. A and B may be singular or plural. The character "/" generally represents an "or" relationship between associated objects. "At least one of the following items (pieces)" or a similar expression thereof indicates any combination of these items, including a single item (piece) or any combination of a plurality of items (pieces). For example, at least one of a, b, or c may represent seven cases: a, b, c, a and b, a and c, b and c, and a, b and c. Each of a, b, and c may be an element, or may be a set including one or more elements.

In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Specifically, the term "example" is used for presenting a concept in a specific manner.

It should be noted that, in embodiments of this application, terms such as "first" and "second" are only used for a purpose of distinction in description, but should not be understood as an indication or implication of relative importance or an indication or implication of a sequence.

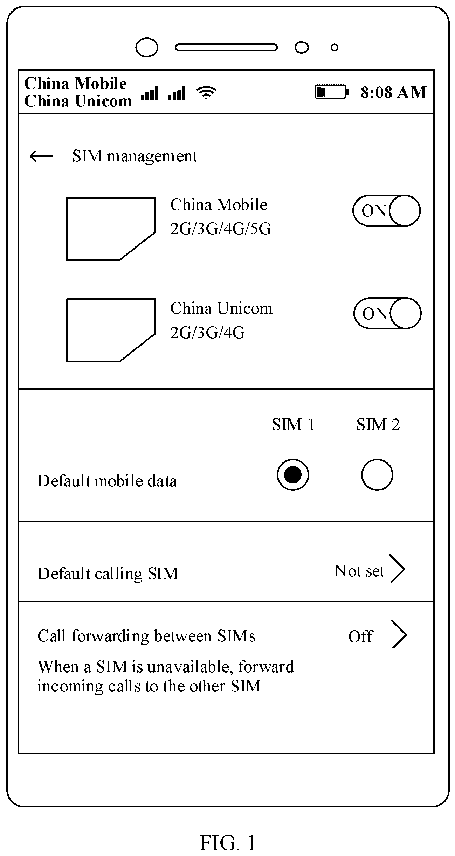

Currently, an electronic device supporting dual cards or multiple cards can provide an internet access service for a user at a same moment by using only one SIM card. Specifically, the SIM card for providing the internet access service may be a default internet access card that is set by the user based on user requirements. The user may set the default internet access card on a SIM card management interface. For example, the SIM card management interface may be shown in FIG. 1. When the user selects a card 1 option in default mobile data, the electronic device sets a SIM card 1 as the default internet access card. For example, a SIM card 1 and a SIM card 2 are installed on the electronic device, and the SIM card 1 is a default internet access card. The electronic device establishes a data service connection to an operator network based on the SIM card 1, so that an application installed on the electronic device may perform data communication for internet access through the data service connection established based on the SIM card 1, and then generate data traffic. However, because all different applications perform data communication for internet access through the data service connection established based on the SIM card 1, data traffic generated when the different applications installed on the electronic device access the internet belongs to an account identified by an IMSI of the SIM card 1. The operator network performs charging based on usage of the data traffic of the account identified by the IMSI of the SIM card 1 and a data package purchased by the user for the account identified by the IMSI of the SIM card 1.

Specifically, the data package purchased by the user for the account identified by the IMSI of the SIM card 1 may be a general data package, or may be a dedicated data package for some specific applications. When the data package purchased by the user for the account identified by the IMSI of the SIM card 1 is a dedicated data package for some specific applications, the operator network generally separately charges data traffic generated when these specific applications access the internet and data traffic generated when an application other than the specific applications accesses the internet. It should be noted that the data traffic generated when the specific applications access the internet is dedicated data traffic, and the data traffic generated when the application other than the specific applications accesses the internet is general data traffic. Generally, when usage of the dedicated data traffic is less than a dedicated data traffic limit specified in the dedicated data package, and usage of the general data traffic is less than a general data traffic limit specified in the dedicated data package, the operator network performs charging based on a price of the dedicated data package. Generally, the dedicated data traffic limit in the dedicated data package is large, so that the usage of the dedicated data traffic generated when the specific applications access the internet does not exceed the dedicated data traffic limit. However, the general data traffic limit in the dedicated data package is small, or even is 0, and the usage of the general data traffic generated when the application other than the specific applications accesses the internet easily exceeds the general data traffic limit, so that the operator network needs to separately charges general data traffic beyond the dedicated data traffic limit based on a traffic unit price. This is prone to result in an internet access fee beyond the dedicated data package. The traffic unit price indicates a price of unit data traffic. For example, the unit data traffic may be 1 GB data traffic, or may be 1 byte data traffic. This is not limited in this application.

It should be noted that, in this application, in addition to an IMSI of a SIM card, another identifier may be further used by the operator network to distinguish between different accounts, for example, a mobile phone number, an international mobile equipment identity (international mobile equipment identity, IMEI), and/or a universally unique identifier (universally unique identifier, UUID). This is not limited. The IMSI is used as an example for description in embodiments of this application.

It may be understood that the dedicated data package for some specific applications is provided by an operator cooperating with developers of the specific applications. When the specific applications run on the electronic device, the operator network (for example, a core network device) determines, based on identification information of the electronic device and an address (for example, a server address or an internet protocol (internet protocol, IP) address) of an application that needs to be accessed, whether to use a separate charging specification. The identification information of the electronic device may be a parameter such as a mobile phone number, an account number, an IMSI, an IMEI, a MAC, a UUID, or an IDFA. When a non-specific application runs on the electronic device, another charging rule may be used, for example, a subscribed package provided by the operator. A common SIM card that uses dedicated data traffic, for example, a "Tencent King" card, is jointly launched by China Unicom and Tencent. When an application of Tencent, for example, Tencent Video, runs on an electronic device in which the SIM card of this type is installed, a separate traffic calculation rule may be used. For example, this type of card includes 40 G traffic that may be used to run the application of Tencent, and another traffic calculation rule may be used to run another application.

In some embodiments, the user may implement a voice call with another user by using a phone application installed on the electronic device. For the voice call, the electronic device performs communication by using a default dialing card, and the operator network charges used duration of the voice call for an account identified by an IMSI of the default dialing card. When the used duration of the voice call does not exceed purchased voice call minutes in the account identified by the IMSI of the default dialing card, charging is performed based on a voice call package purchased for the account identified by the IMSI of the default dialing card of the user. Based on a price of the voice call per minute, the operator network charges voice call duration that exceeds the purchased voice call minutes. Similarly, when the user sends an SMS message to another user by using an SMS message application installed on the electronic device, when the SMS message application runs, the SMS message may be sent or received by using the default dialing card. The operator network performs charging based on an SMS message charging rule. It should be noted that the default dialing card may be set by the user on the SIM card management interface based on user requirements. Alternatively, when no default dialing card is set on the SIM card management interface, and when two or more SIM cards are installed, the electronic device sends or receives an SMS message or performs voice communication by using, based on a mobile phone number selected by the user, a SIM card identified by the mobile phone number of the user.

In the foregoing technical solution, when surfing the internet by using the electronic device, the user can use only the data package purchased for the account identified by the IMSI of the SIM card 1 that is set as the default internet access card, and cannot use a data package purchased for an account identified by an IMSI of another SIM card. If the user needs to use the data package purchased for the account identified by the IMSI of the another SIM card, the user needs to perform an operation on the electronic device to switch the default internet access card from the SIM card 1 to the another SIM card. This increases a user operation. In addition, the network is interrupted in a process of switching the default internet access card. This is prone to result in poor user experience.

In view of this, an embodiment of this application provides an internet access method. A smart dual-card or multi-card internet access function is added to an electronic device. When the smart dual-card or multi-card internet access function is enabled, a user does not need to switch a default internet access card, and the electronic device may use a first SIM card associated with a first application to perform a data service when the first application runs and use a second SIM card associated with a second application to perform a data service when the second application runs. In this case, a data package used by the first application to access the internet is a data package purchased by the user for an account identified by an IMSI of the SIM card associated with the first application, and a data package used by the second application to access the internet is a data package purchased by the user for an account identified by an IMSI of the SIM card associated with the second application. Therefore, when the user surfs the internet by using the electronic device, data traffic generated by different applications installed on the same electronic device may be separately charged based on different data packages. This helps improve user experience.

For example, the electronic device in embodiments of this application may be a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the electronic device is not limited in embodiments of this application.

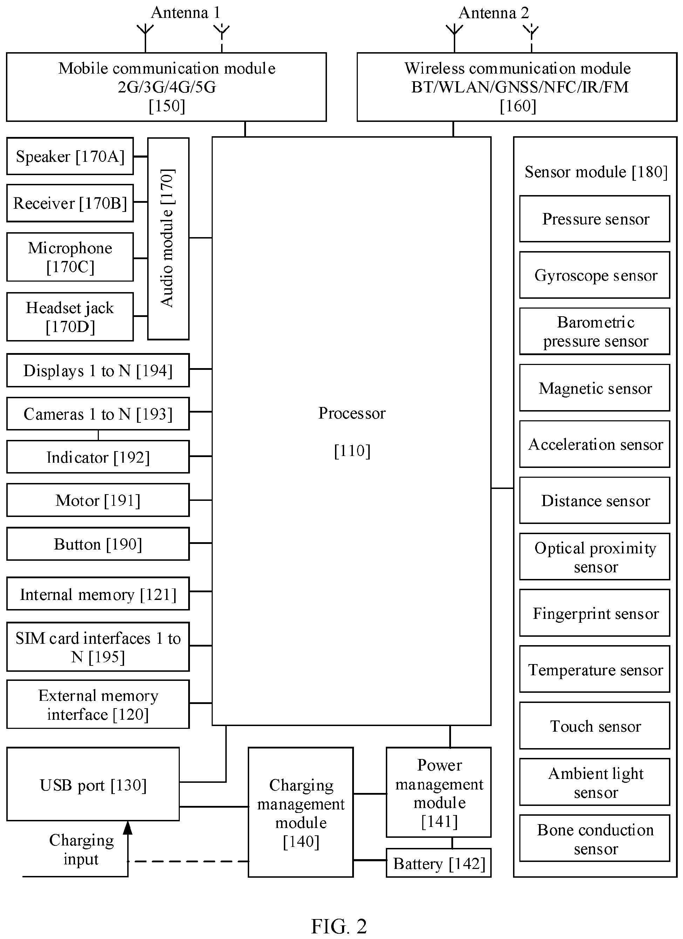

For example, FIG. 2 is a schematic diagram of a structure of an electronic device according to an embodiment of this application. Specifically, as shown in the figure, the electronic device includes a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 110 may include one or more processing units. For example, the processor 110 may include an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or two or more different processing units may be integrated into one component.

The controller may be a nerve center and a command center of the electronic device. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. For example, the processor 110 includes the universal serial bus (universal serial bus, USB) port 130, and the subscriber identity module (subscriber identity module, SIM) interface 195. For another example, the processor 110 may further include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and/or the like.

It may be understood that, an interface connection relationship between the modules shown in this embodiment of this application is merely an example for description, and does not constitute a limitation on the structure of the electronic device. In some other embodiments of this application, the electronic device may alternatively use an interface connection manner different from that in the foregoing embodiment, or a combination of a plurality of interface connection manners.

The USB port 130 is a port that conforms to a USB standard specification, and may be specifically a mini USB port, a micro USB port, a USB Type-C port, or the like. The USB port 130 may be configured to connect to a charger to charge the electronic device, may be configured to transmit data between the electronic device and a peripheral device, or may be configured to connect to a headset for playing audio through the headset. The port may be further configured to connect to another electronic device such as an AR device.

The SIM card interface 195 is configured to connect to a SIM card. The SIM card may be inserted into the SIM card interface 195 or removed from the SIM card interface 195, to implement contact with or be separated from the electronic device. The electronic device may support 2 or N SIM card interfaces, where N is a positive integer greater than 2. The SIM card interface 195 may support a nano SIM card, a micro SIM card, a SIM card, and the like. A plurality of cards may be simultaneously inserted into the same SIM card interface 195. The plurality of cards may be of a same type or different types. The SIM card interface 195 may also be compatible with different types of SIM cards. The SIM card interface 195 may also be compatible with an external storage card. The electronic device interacts with a network by using the SIM card, to implement functions such as calling and data communication. In some embodiments, the electronic device uses an eSIM, namely, an embedded SIM card. The eSIM card may be embedded into the electronic device, and cannot be separated from the electronic device.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem, the baseband processor, and the like.

The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device and that is for wireless communication including formats such as 2G/3G/4G/5G. The mobile communication module 150 may include at least one filter, a switch, a power amplifier, a low noise amplifier (low noise amplifier, LNA), and the like.

The wireless communication module 160 may provide a solution that is applied to the electronic device and that is for wireless communication such as a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The electronic device implements a display function through the GPU, the display 194, the application processor, and the like. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

The electronic device can implement a photographing function through the ISP, the camera 193, the video codec, the GPU, the display 194, the application processor, and the like. The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device may include one or N cameras 193, where N is a positive integer greater than 1.

The external memory interface 120 may be configured to connect to an external storage card, for example, a micro SD card, to extend a storage capability of the electronic device. The external memory card communicates with the processor 110 through the external memory interface 120, to implement a data storage function. For example, a file such as music or a video is stored in the external storage card.

The internal memory 121 includes a running memory (memory) and a built-in memory. The running memory may be configured to store program instructions, data, or the like. The processor 110 runs the instructions stored in the running memory, to perform various function applications of the electronic device and data processing. For example, the running memory may include a high speed random access memory. The built-in memory may also be referred to as a built-in external memory or the like, and may be configured to store program instructions and/or data. For example, the built-in memory may store an operating system, an application, and the like. Generally, after the electronic device loads the program instructions and/or data in the built-in memory to the running memory, the processor 110 runs the corresponding program instructions and/or data to implement a corresponding function. In addition, the internal memory 121 may include a nonvolatile memory, for example, at least one magnetic disk storage device, a flash memory, and a universal flash storage (universal flash storage, UFS).

The electronic device may implement an audio function, for example, music playing and recording, through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch-sensitive button. The electronic device may receive a button input, and generate a button signal input related to user settings and function control of the electronic device.

The motor 191 may generate a vibration prompt. The motor 191 may be configured to provide an incoming call vibration prompt and a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. Touch vibration feedback effect may be further customized.

The indicator 192 may be an indicator light that may be configured to indicate a charging state and a battery power change, and may further be configured to indicate a message, a missed call, a notification, and the like.

It may be understood that the structure shown in this embodiment of this application does not constitute a specific limitation on the electronic device. In some other embodiments of this application, the electronic device may include more or fewer components than those shown in the figure, or some components may be combined, or some components may be split, or there may be a different component arrangement. The components shown in the figure may be implemented by hardware, software, or a combination of software and hardware.

The internet access method in this embodiment of this application is described in detail in an example of a mobile phone that has the hardware structure of the electronic device shown in FIG. 2 and that is connected to the SIM card 1 and the SIM card 2 through the SIM card interface 195.

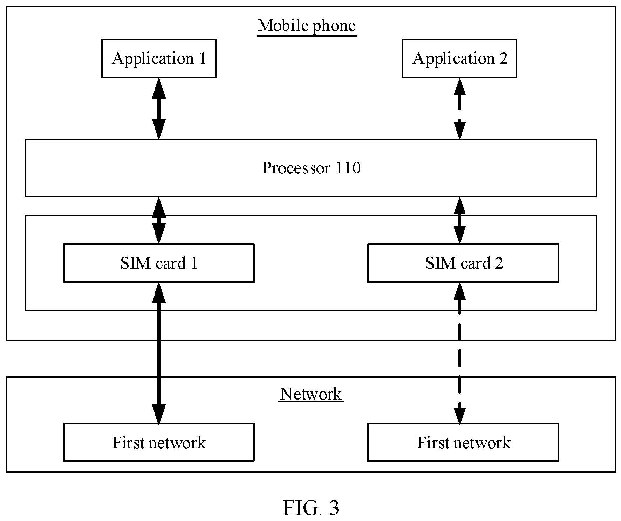

For example, FIG. 3 is a schematic diagram of an application scenario according to an embodiment of this application. Specifically, an application 1 is associated with the SIM card 1, and an application 2 is associated with the SIM card 2. If the smart dual-card internet access function is enabled, when the application 1 runs, a mobile phone uses the SIM card 1 to perform a data service. In other words, when the application 1 runs, the mobile phone uses the SIM card 1 to establish a first data service connection to a first network to perform data communication. When the application 2 runs, the mobile phone uses the SIM card 1 to perform a data service. In other words, when the application 2 runs, the mobile phone uses the SIM card 2 to establish a second data service connection to a second network to perform data communication. The first network is an operator network for managing the account identified by the IMSI of the SIM card 1. The second network is an operator network for managing an account identified by an IMSI of the SIM card 2. It should be noted that the application 1 and the application 2 may run simultaneously, or may not run simultaneously. For example, when the application 1 runs in a foreground, the application 2 runs in a background. For another example, both the application 1 and the application 2 run in the background. For still another example, both the application 1 and the application 2 run in the foreground.

It should be noted that, that the application 1 is associated with the SIM card 1 may be understood as follows: When the data package purchased by the user for the account identified by the IMSI of the SIM card 1 is a dedicated data package for applications of a first developer, the application 1 belongs the applications of the first developer. For example, when the data package purchased by the user for the account identified by the IMSI of the SIM card 1 is a dedicated data package for applications of Tencent, the application 1 belongs to the applications of Tencent, for example, Tencent Video. When the application 1 runs, data communication is performed through the first data service connection established based on the SIM card 1, so that when accessing the internet, the application 1 uses the data package purchased by the user for the account identified by the IMSI of the SIM card 1. In addition, the first network performs charging based on usage of the data traffic of the account identified by the IMSI of the SIM card 1 and the data package purchased by the user for the account identified by the IMSI of the SIM card 1.

Similarly, that the application 2 is associated with the SIM card 2 may be understood as follows: When the data package purchased by the user for the account identified by the IMSI of the SIM card 2 is a dedicated data package for applications of a second developer, the application 2 belongs to the applications of the second developer. For example, when the data package purchased by the user for the account identified by the IMSI of the SIM card 2 is a dedicated data package for applications of Alibaba, the application 2 belongs to the applications of Alibaba, for example, Taobao. When the application 2 runs, data communication is performed through the second data service connection established based on the SIM card 2, so that when accessing the internet, the application 2 uses the data package purchased by the user for the account identified by the IMSI of the SIM card 2. In addition, the second network performs charging based on usage of the data traffic of the account identified by the IMSI of the SIM card 2 and the data package purchased by the user for the account identified by the IMSI of the SIM card 2.

Specifically, in some embodiments, the mobile phone may obtain, from the first network, information about the data package purchased for the account identified by the IMSI of the SIM card 1, and obtain, from the second network, information about the data package purchased by the user for the account identified by the IMSI of the SIM card 2. An application associated with the SIM card 1 is determined, from all applications installed on the mobile phone, based on the information about the data package purchased by the user for the account identified by the IMSI of the SIM card 1. An application associated with the SIM card 2 is determined, from all the applications installed on the mobile phone, based on the information about the data package purchased by the user for the account identified by the IMSI of the SIM card 2.

In some embodiments, when an application 3 is further installed on the mobile phone, if the application 3 is not associated with the SIM card 1 and the SIM card 2, when the application 3 runs, the mobile phone performs data communication for internet access through a data connection established based on a default internet access card. In other words, the application 3 accesses the internet by using a data package purchased by the user for an account identified by an IMSI of the default internet access card, and an operator network for managing the account identified by the IMSI of the default internet access card of the user charges data traffic of the account identified by the IMSI of the default internet access card of the user.

That the application 3 is not associated with the SIM card 1 and the SIM card 2 may be understood as follows: When the data package purchased by the user for the account identified by the IMSI of the SIM card 1 is a dedicated data package for the applications of the first developer, and the data package purchased by the user for the account identified by the IMSI of the SIM card 2 is a dedicated data package for the applications of the second developer, the application 3 does not belong to the applications of the first developer and the applications of the second developer. When the data package purchased by the user for the account identified by the IMSI of the SIM card 1 is a dedicated data package for the applications of Tencent, and the data package purchased by the user for the account identified by the IMSI of the SIM card 2 is a dedicated data package for the applications of Alibaba, the application 3 does not belong to the applications of Tencent and the applications of Alibaba, for example, Online Service Center.

For example, the SIM card 1 is the default internet access card. When the application 3 runs, the mobile phone performs data communication for internet access through the first data service connection established based on the SIM card 1. In other words, the data package used by the application 3 to access the internet is the data package purchased by the user for the account identified by the IMSI of the SIM card 1. The first network performs charging based on usage of the data traffic of the account identified by the IMSI of the SIM card 1 and the data package purchased by the user for the account identified by the IMSI of the SIM card 1.

It should be noted that the application 1 is associated with the SIM card 1, and the application 3 is not associated with the SIM card 1. Although both the application 1 and the application 3 are charged for by the first network based on the usage of the data traffic of the account identified by the IMSI of the SIM card 1 and the data package purchased by the user for the account identified by the IMSI of the SIM card 1, charging rules are different. Specifically, the data traffic generated when the application 1 accesses the internet is dedicated data traffic, and the data traffic generated when the application 3 accesses the internet is general data traffic. When usage of the dedicated data traffic of the account identified by the IMSI of the SIM card 1 does not reach a dedicated data traffic limit, and usage of the general data traffic of the account identified by the IMSI of the SIM card 1 does not reach a communication data traffic limit, the first network performs charging based on a price of the data package of the account identified by the IMSI of the SIM card 1. When the usage of the general data traffic of the account identified by the IMSI of the SIM card 1 exceeds the communication data traffic limit, the general data traffic that exceeds the communication data traffic limit and that is of the account identified by the IMSI of the SIM card 1 is charged by the first network based on a traffic unit price.

In some embodiments, the smart dual-card internet access function of the mobile phone is enabled in response to a first operation. The first operation is used for enabling the smart dual-card internet access function. For example, the first operation may be an operation of turning on a key for controlling enabling or disabling of the smart dual-card internet access function. For another example, the first operation may alternatively be a voice instruction operation, a shortcut gesture operation, or the like. This is not limited.

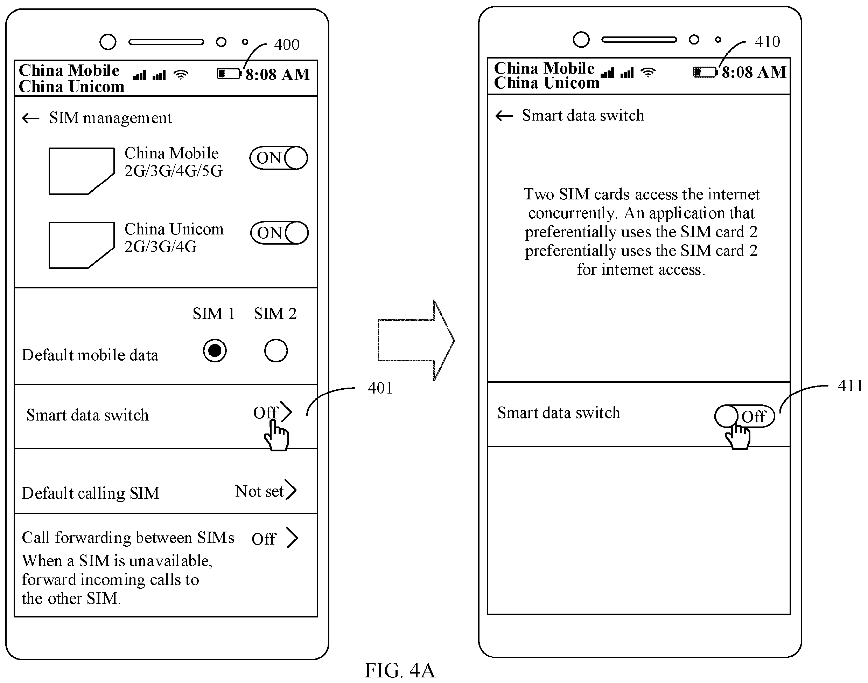

For example, in this embodiment of this application, a key or an option for controlling enabling of the smart dual-card internet access function may be added to a SIM card management interface, so that the user can enable or disable the smart dual-card internet access function based on user requirements. For example, the SIM card 1 is a default internet access card. The SIM card management interface may be an interface 400 shown in FIG. 4A. The interface 400 includes a smart data switch option 401. In response to a tap operation performed by the user on the smart data switch option 401, a smart data switch interface is displayed on a display of the mobile phone. For example, the smart data switch interface may be an interface 410 shown in FIG. 4A. The interface 410 includes a smart data switch key 411. The smart data switch key 411 is configured to control enabling or disabling of the smart dual-card internet access function. When the smart data switch key 411 is off (OFF), in response to an operation performed by the user on the smart data switch key 411, the smart data switch key 411 is turned on (ON), so that the smart dual-card internet access function is enabled. It should be noted that, when the smart data switch key 411 is on, the mobile phone may further automatically switch a default internet access card based on information such as network quality, signal strength, and/or data traffic usage. For example, when the smart data switch key 411 is on, when the SIM card 1 is a default internet access card, if network quality of the SIM card 2 is better than network quality of the SIM card 1, the mobile phone may further automatically switch the default internet access card to the SIM card 2. Certainly, it may be understood that, in this embodiment of this application, the mobile phone may further separately control enabling or disabling of a default internet access card automatic switching function (which may also be referred to as a default internet access card smart switching function) and the smart dual-card internet access function through two functional keys.

For example, the application 1 is associated with the SIM card 1. The application 2 is associated with the SIM card 2. The application 3 is not associated with the SIM card 1 and the SIM card 2. If the SIM card 1 is a default internet access card, if the default internet access card automatic switching function is enabled, and the smart dual-card internet access function is enabled, when the application 1 runs, the mobile phone uses the SIM card 1 to perform a data service, when the application 2 runs, the mobile phone uses the SIM card 2 to perform a data service, and when the application 3 runs, the mobile phone uses the SIM card 1 to perform a data service. However, when detecting an event (for example, network signal strength of the SIM card 1 is small, or used data traffic reaches a limit), the mobile phone automatically switches the default internet access card to the SIM card 2. After the default internet access card is switched to the SIM card 2, when the application 1 runs, the mobile phone continues to use the SIM card 1 to perform a data service, when the application 2 runs, the mobile phone continues to use the SIM card 2 to perform a data service, and when the application 3 runs, the mobile phone switches to the SIM card 2 to perform a data service.

In some embodiments, when detecting an event (for example, network signal strength of the SIM card 1 is small, or used data traffic reaches a limit), the mobile phone prompts the user whether to switch the default internet access card to the SIM card 2, and switches the default internet access card to the SIM card 2 in response to a user operation of agreeing to switch the default internet access card to the SIM card 2. This improves permission of the user to know. In some other embodiments, when the user refuses to switch the default internet access card to the SIM card 2, the mobile phone continues to keep the SIM card 1 as the default internet access card.

In some other embodiments, if the smart dual-card internet access function is supported, the mobile phone may further automatically enable the smart dual-card internet access function when detecting that a Wi-Fi network is disconnected. Further, if the smart dual-card internet access function is supported, the mobile phone prompts the user whether to enable the smart dual-card internet access function when detecting that the Wi-Fi network is disconnected. In response to a user operation of agreeing to enable the smart dual-card internet access function, the smart dual-card internet access function is enabled. This helps improve permission of the user to know. For example, the mobile phone may prompt, through a dialog box displayed on the display and/or through a voice, the user whether to enable the smart dual-card internet access function.

In addition, in this embodiment of this application, the first data service connection and the second data service connection may be established by the mobile phone in response to a power-on operation of the user. Alternatively, if the SIM card 1 is the default internet access card, the first data service connection is established by the mobile phone based on the SIM card 1 in response to the power-on operation of the user, and the second data service connection is established by the mobile phone based on the SIM card 2 in response to enabling of the smart dual-card internet access function.

Specifically, in this embodiment of this application, antennas that are coupled to the mobile communication module and that correspond to the first data service connection and the second data service connection respectively may be a same antenna, or may be different antennas. When the antennas that are coupled to the mobile communication module and that correspond to the first data service connection and the second data service connection respectively are the same antenna, the antenna coupled to the mobile communication module is time-multiplexed for the first data service connection and the second data service connection.

If the SIM card 1 is the default internet access card, further, in some embodiments, when the second data service connection is in an idle (idle) state, the mobile phone unbinds the antenna that is bound to the second data service connection and that is coupled to the mobile communication module, so that the second data service connection no longer occupies the antenna coupled to the mobile communication module, and the first data service connection may individually occupy the antenna coupled to the mobile communication module. Therefore, if the first data service connection and the second data service connection are separately bound to the same antenna coupled to the mobile communication module, communication efficiency of the first data service connection is improved. When the second data service connection is switched from the idle (idle) state to a connected (connected) state, the mobile phone rebinds the second data service connection to the antenna coupled to the mobile communication module, to restore data communication of the second data service connection. In some embodiments, when the second data service connection is in the idle state, the mobile phone may alternatively not unbind the antenna that is coupled to the mobile communication module and that corresponds to the second data service connection. For the first data service connection, regardless of whether the second data service connection is in the idle state or the connected state, the binding relationship between the first data service connection and the antenna coupled to the mobile communication module is not released.

In an example of the second data service connection, that the second data service connection is in the idle state may be understood as that no data communication is performed on the second data service connection. When no application uses the second data service connection to perform communication, the second data service connection is in the idle state. Correspondingly, that the second data service connection is in the connected state may be understood as that there is data communication on the second data service connection.

In some other embodiments of this application, if the smart dual-card internet access function is disabled, when the application 1 runs, the mobile phone uses the default internet access card to perform a data service, and when the application 2 runs, the mobile phone uses the default internet access card to perform a data service. In addition, when the application 3 runs, the mobile phone also uses the default internet access card to perform a data service. In other words, if the smart dual-card internet access function is disabled, regardless of whether the application installed on the mobile phone is associated with the SIM card 1, or is associated with the SIM card 2, or is not associated with the SIM card 1 and the SIM card 2, when the application installed on the mobile phone runs, the default internet access card is used to perform a data service. In other words, based on a data package purchased by the user for an account identified by an IMSI of the default internet access card, an operator network for managing the account identified by the IMSI of the default internet access card of the user charges data traffic of the account identified by the IMSI of the default internet access card of the user.

For example, the SIM card 1 is the default internet access card. If the smart dual-card internet access function is disabled, when the application 1, the application 2, and the application 3 run, the mobile phone uses the SIM card 1 to perform a data service for internet access. In other words, the data package purchased by the user for the account identified by the IMSI of the SIM card 1 is used by the application 1, the application 2, and the application 3, and is charged by the first network based on the data traffic usage and the data package of the account identified by the IMSI of the SIM card 1. It should be noted that the application 1 is associated with the SIM card 1, and the application 2 and the application 3 are not associated with the SIM card 1. Although the application 1, the application 2, and the application 3 are all charged for by the first network based on the usage of the data traffic of the account identified by the IMSI of the SIM card 1 and the data package purchased by the user for the account identified by the IMSI of the SIM card 1, charging rules are different. For details, refer to the foregoing charging rules for the application 1 and the application 3. Details are not described herein again.

For example, in this embodiment of this application, the mobile phone may disable the smart dual-card internet access function in response to a second operation. The second operation may be an operation of turning off (OFF) a key for controlling the smart dual-card internet access function. Alternatively, the second operation may be a voice instruction disabling operation, a shortcut gesture operation, or the like that controls the smart dual-card internet access function. Alternatively, the mobile phone may disable the smart dual-card internet access function when detecting that the usage of the data traffic of the account identified by the IMSI of the SIM card 1 and/or the SIM card 2 exceeds a traffic limit, or when detecting that network signal strength of the first network or the second network is less than a threshold.

For example, data packages purchased by the user for the accounts identified by IMSIs of the SIM card 1 and the SIM card 2 are Tencent King card and Alibaba Bao card respectively. The Tencent King card is a dedicated data package for the applications of Tencent. The Alibaba Bao card is a dedicated data package for the applications of Alibaba. For example, the SIM card 1 is the default internet access card. When Taobao, Tencent Video, and Online Service Center are installed on the mobile phone, if the smart dual-card internet access function is disabled, when Taobao, Tencent Video, and Online Service Center run, the Tencent King card is used for internet access based on the SIM card 1, and the first network performs charging based on data package information of the Tencent King card, usage of dedicated data traffic, and usage of general data traffic. Data traffic generated when Tencent Video runs is dedicated data traffic. Data traffic generated when Taobao and Online Service Center run is general data traffic. After the smart dual-card internet access function is enabled in response to an operation of turning on or enabling the smart dual-card internet access function, when Tencent Video runs, the Tencent King card is used for internet access based on the SIM card 1, and when Taobao runs, the Alibaba Bao card is used for internet access based on the SIM card 2. Because the SIM card 1 is the default internet access card, when Online Service Center runs, the Tencent King card is used for internet access based on the SIM card 1.

It should be noted that, in this embodiment of this application, Tencent Video, Taobao, and Online Service Center may run at the same time, or may not run at the same time. Regardless of whether these applications run at the same time, when the smart dual-card internet access function is enabled, Tencent Video and Online Service Center access the internet based on the SIM card 1, and Taobao accesses the internet based on the SIM card 2. Therefore, different applications on a same mobile phone may use data packages identified by IMSIs of different SIM cards. This helps reduce an internet access fee for the user and improves user experience.

Further, in some embodiments, if the SIM card 1 is the default internet access card, when the smart dual-card internet access function is enabled, the user may further set, based on user requirements, an application that preferentially uses the SIM card 2 for internet access. Therefore, it is convenient for the user to set, when the smart dual-card internet access function is enabled, applications that use different SIM cards for internet access.

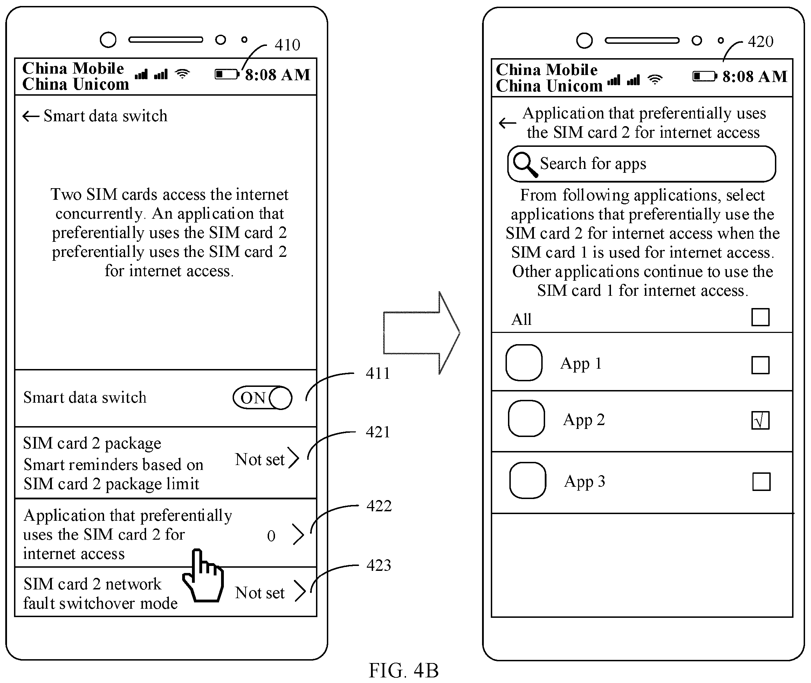

For example, in this embodiment of this application, an application option for preferentially using the SIM card 2 for internet access may be set on a smart data switch interface, so that the user can set, based on user requirements, applications that preferentially use the SIM card 2 for internet access. For example, when the smart dual-card internet access function is enabled, the smart data switch interface may be an interface 410 shown in FIG. 4B. The interface 410 includes an application option 422 for preferentially using the SIM card 2 for internet access. In response to a tap operation performed by the user on the application option 422 for preferentially using the SIM card 2 for internet access, the mobile phone displays, on the display, an application interface for preferentially using the SIM card 2 for internet access. The application interface for preferentially using the SIM card 2 for internet access includes an option indicating at least one application.

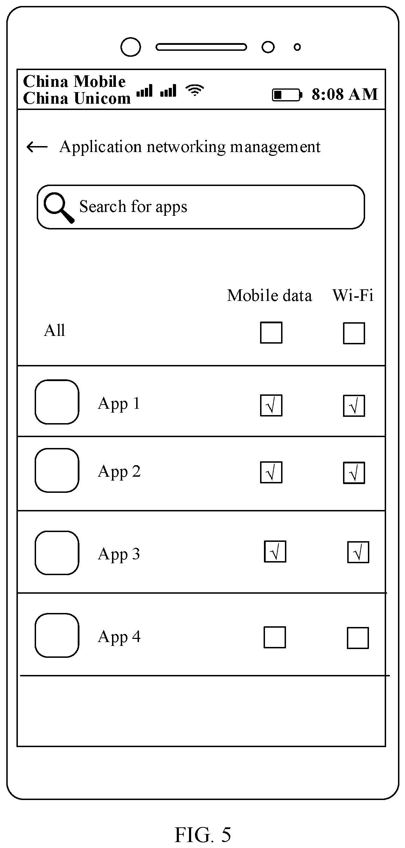

For example, the option that is of the at least one application and that is included by the application interface for preferentially using the SIM card 2 for internet access may be options of all applications installed on the mobile phone, or may be options of some applications installed on the mobile phone. For example, the application interface for preferentially using the SIM card 2 for internet access includes an option of an application that is installed on the mobile phone and whose mobile data is enabled. For example, the user may enable or disable, on an application networking management interface, the mobile data of the application installed on the mobile phone. When the mobile data of the application is disabled, the application cannot use a SIM card to perform a data service. When the mobile data of the application is enabled, the application may use a SIM card associated with the application to perform a data service. For example, an application 1, an application 2, an application 3, and an application 4 are installed on the mobile phone. The application networking management interface may be shown in FIG. 5. When mobile data options of the application 1, the application 2, and the application 3 are selected, the mobile data of the application 1, the mobile data of the application 2, and the mobile data of the application 3 are in an on state. When a mobile data option of the application 4 is not selected, the mobile data of the application 4 is in an off state. In this case, the application interface for preferentially using the SIM card 2 for internet access includes an option of the application 1, an option of the application 2, and an option of the application 3, but does not include an option of the application 4.

For example, the application interface for preferentially using the SIM card 2 for internet access is an interface 420 shown in FIG. 4B. As shown in FIG. 4B, the interface 420 includes the option of the application 1, the option of the application 2, and the option of the application 3. When the option of the application 2 is selected, when the application 2 runs, the SIM card 2 is used to perform a data service for internet access. However, if the application 2 is associated with the SIM card 2, if the option of the application 2 is not selected, when the application 2 runs, the SIM card 1 is used to perform a data service for internet access. Particularly, the application 1 is associated with the SIM card 1. If the option of the application 1 is selected, when the application 1 runs, the SIM card 2 is used to perform a data service for internet access. Alternatively, the application 3 is not associated with the SIM card 1 and the SIM card 2. If the option of the application 1 is selected, when the application 3 runs, the SIM card 2 is used to perform a data service for internet access. However, if the application 1 and the application 3 are not selected, when the application 1 and the application 3 run, the SIM card 1 is used to perform a data service for internet access.

Further, in some embodiments, the application interface for preferentially using the SIM card 2 for internet access further includes a search box for application options. The user may enter a name of an application in the search box to quickly search for an option of the application. Alternatively, when the display cannot display options of all applications included by the application interface for preferentially using the SIM card 2 for internet access, the user may perform an up/down slide operation on the display, so that the options of the applications in different areas on the application interface for preferentially using the SIM card 2 for internet access can be displayed on the display to be conveniently viewed by the user.

In some embodiments, if the SIM card 1 is the default internet access card, in response to a user operation of starting an application (for example, the application 2) that preferentially uses the SIM card 2 for internet access, the mobile phone prompts the user that the application 2 is set as an application that preferentially uses the SIM card 2 for internet access, and whether to continue to start or use the application 2. This avoids that the application 2 mistakenly uses the SIM card 2 for internet access, causing an extra internet access fee.

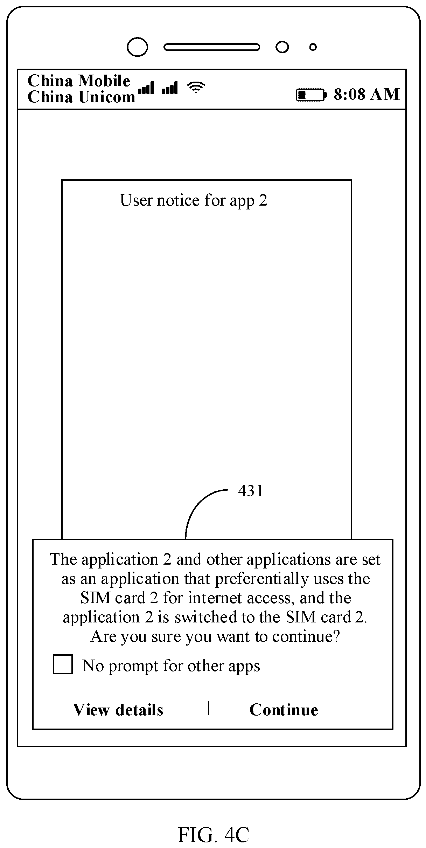

For example, the mobile phone displays the dialog box on the display. The dialog box includes prompt information, a view details key, and a continue key. The prompt information is used for prompting that the application 2 is set as an application that preferentially uses the SIM card 2 for internet access, and whether to continue to use the application 2. For example, the prompt information may be "The application 2 is set as an application that preferentially uses the SIM card 2 for internet access, and the application 2 is switched to the SIM card 2. Are you sure you want to continue?" For another example, when another application is set as an application that preferentially uses the SIM card 2 for internet access, the prompt information may be "The application 2 and another application are set as an application that preferentially uses the SIM card 2 for internet access, and the application 2 is switched to the SIM card 2. Are you sure you want to continue?" Further, the dialog box further includes an option of don't ask again for other apps. When the user selects the option of don't ask again for other apps, the mobile phone no longer displays a dialog box in response to a user operation of starting another application associated with the SIM card 2. This helps reduce user operations. In response to a tap operation performed by the user on the view details key, the mobile phone displays a selection interface of the application that preferentially uses the SIM card 2 for internet access. The user may perform corresponding setting based on user requirements. In response to a tap operation performed by the user on the continue key, the mobile phone performs data communication for the application 2 through the second data service connection established to the second network based on the SIM card 2, and displays an interface of the application 2 on the display. For example, when the smart dual-card internet access function is enabled, if the application 2 is set as an application that preferentially uses the SIM card 2 for internet access, the mobile phone displays, on the display, the dialog box 431 shown in FIG. 4C in response to a user operation of starting the application 2.

In some other embodiments, if the SIM card 1 is the default internet access card, when the smart dual-card internet access function is enabled, the user may further set a package limit for the SIM card 2, to avoid an extra fee generated when usage exceeds the limit.

For example, when the smart dual-card internet access function is enabled, the user may set the package limit for the SIM card 2 on the smart data switch interface. For example, as shown in FIG. 4B, when the smart dual-card internet access function is enabled, the smart data switch interface 410 includes a SIM card 2 package option 421. In response to a tap operation performed by the user on the SIM card 2 package option 421, the mobile phone displays, to the user on the display, an interface for setting a SIM card 2 package limit, so that the user sets the SIM card 2 package limit. Alternatively, in some embodiments, the mobile phone automatically sets the SIM card 2 package limit based on the information about the data package purchased by the user for the account identified by the IMSI of the SIM card 2. Alternatively, if the smart dual-card internet access function is enabled, the mobile phone automatically sets an initial value of the SIM card 2 package limit based on the information about the data package purchased by the user for the account identified by the IMSI of the SIM card 2. The user may modify the SIM card 2 package limit on the smart data switch interface based on user requirements. This avoids that when the user forgets to set the SIM card 2 package limit, the user uses excessive mobile data traffic of the SIM card 2, and an extra fee is generated.

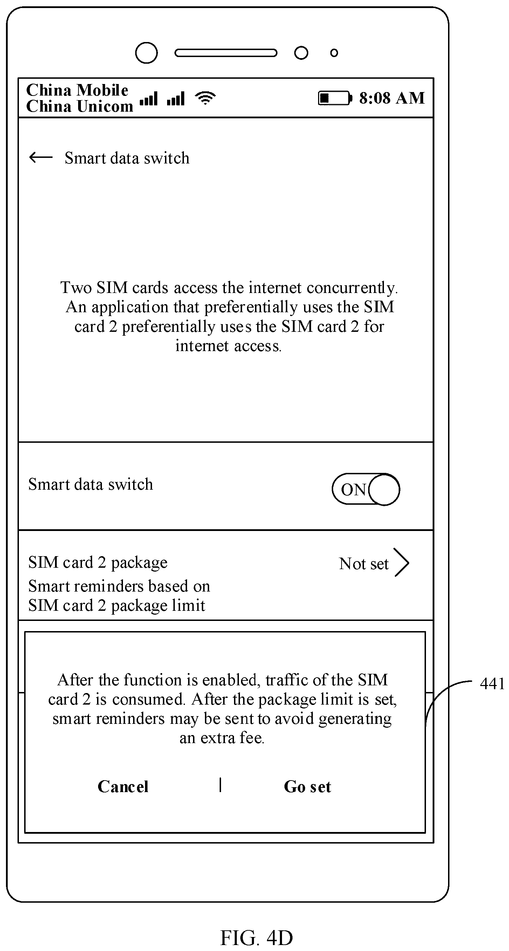

Alternatively, in some embodiments, when the SIM card 1 is the default internet access card, in response to the operation of enabling the smart dual-card internet access function, the mobile phone further prompts the user to set the SIM card 2 package limit. For example, the mobile phone displays a dialog box of the SIM card 2 package limit on the display, to provide a corresponding prompt for the user. For example, the dialog box of the SIM card 2 package limit may be a dialog box 441 shown in FIG. 4D, and includes prompt information, a cancel key, and a go set key. For example, the prompt information may be "After the function is enabled, traffic of the SIM card 2 is consumed. After the package limit is set, smart reminders may be sent to avoid generating a fee beyond the data package".

In addition, in some embodiments of this application, when the SIM card 2 is disconnected from the network, the mobile phone automatically switches, to the SIM card 1, an application that is set to preferentially use the SIM card 2 for internet access. The SIM card 1 is used to perform a data service for internet access. In other words, when the second data service connection is disconnected, the mobile phone automatically switches, to the first data service connection, the application that is set to preferentially use the SIM card 2 for internet access, to perform data communication for internet access. This avoids network disconnection. For example, the application that is set to preferentially use the SIM card 2 for internet access is the application 2. When the second data service connection is disconnected, the mobile phone switches the application 2 to the first data service connection established based on the SIM card 1, to perform data communication for internet access. This avoids network disconnection.

For example, when usage of the data traffic of the account identified by the IMSI of the SIM card 2 of the user reaches a first traffic limit, the mobile phone may automatically disconnect the second data service connection (in other words, disconnect the SIM card 2 from the network). The first traffic limit may be an upper package traffic limit of the SIM card 2, or may be a traffic limit set by the user based on user requirements. Alternatively, when network signal quality or network signal strength of the second network is less than a threshold, the mobile phone may disconnect the second data service connection.

Further, for another example, when the application (for example, the application 2) that is set to preferentially use the SIM card 2 for internet access is successfully switched to the first data service connection to perform data communication, the user is further prompted that the application 2 has been switched to the SIM card 1. This helps improve permission of the user to know.

In some embodiments, when the second data service connection is disconnected, the mobile phone prompts the user that the SIM card 2 is disconnected from the corresponding network and whether to switch the application 2 to the SIM card 1. In response to a user operation of agreeing to switch the application 2 to the SIM card 1, the mobile phone switches the application 2 to the first data service connection established based on the SIM card 1, to perform data communication. This helps improve permission of the user to know. When the user refuses to switch the application 2 to the SIM card 1, the mobile phone disconnects the application 2 from the network, and prompts the user that the application that is set to preferentially use the SIM card 2 for internet access is disconnected from the network.

Alternatively, when the second data service connection is disconnected, the mobile phone disconnects the application 2 from the network. Further, the mobile phone prompts the user that the application that is set to preferentially use the SIM card 2 for internet access is disconnected from the network.

Further, in some embodiments, when the second data service connection is restored properly (in other words, the SIM card 2 restores a proper connection to the network), the application 2 that is set to preferentially use the SIM card 1 for internet access is switched again to the second data service connection established based on the SIM card 2, to perform data communication for internet access.

In some other embodiments, when the second data service connection is disconnected, whether the mobile phone automatically switches, to the SIM card 1. the application that is set to preferentially use the SIM card 2 for internet access, or prompts the user that the SIM card 2 is disconnected from the network, and whether the mobile phone switches, to the SIM card 1, the application that is set to preferentially use the SIM card 2 for internet access, or directly disconnects the application that is set to preferentially use the SIM card 2 for internet access from the network may be preset based on user requirements.

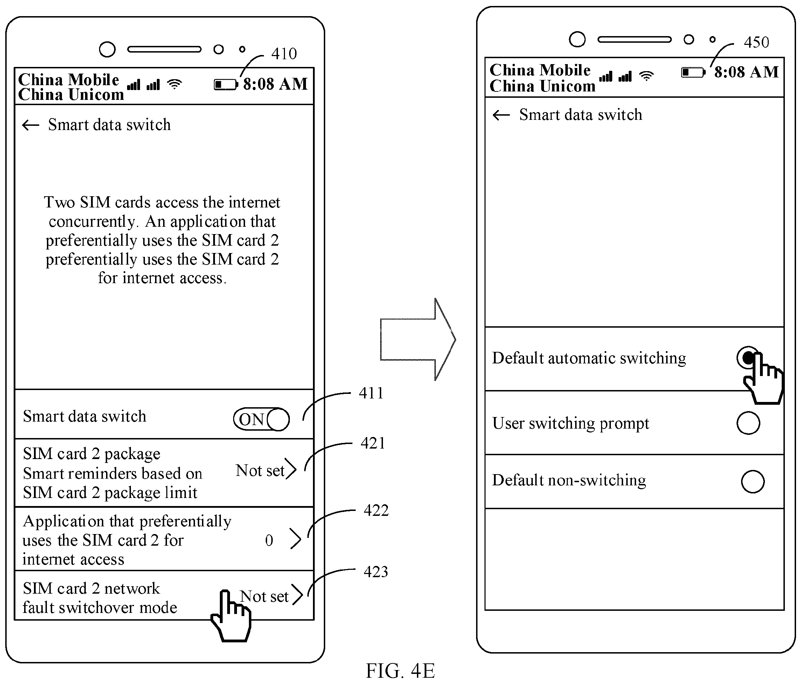

For example, the user may perform corresponding setting on the smart data switch interface. For example, when the smart dual-card internet access function is enabled, the smart data switch interface is an interface 410 shown in FIG. 4E. The interface 410 includes a SIM card 2 network fault switchover mode option 423. In response to a tap operation performed by the user on the SIM card 2 network fault switchover mode option 423, the mobile phone displays an interface 450 on the display. The interface 450 includes the SIM card 2 network fault switchover mode option, including a default automatic switching option, a user switching prompt option, and a default non-switching option. When the default automatic switching option is selected by the user, when the second data service connection is disconnected, the mobile phone automatically switches, to the SIM card 1, the application that is set to preferentially use the SIM card 2 for internet access. When the user switching prompt option is selected by the user, when the second data service connection is disconnected, the mobile phone prompts the user that the SIM card 2 is disconnected from the corresponding network, and whether to switch, to the SIM card 1, the application (for example, the application 2) that preferentially uses the SIM card 2. When the default non-switching option is selected by the user, when the second data service connection is disconnected, the mobile phone disconnects the application (for example, the application 2) that preferentially uses the SIM card 2 from the network.

In addition, the foregoing embodiment is described in an example of a mobile phone on which the SIM card 1 and the SIM card 2 are installed, and does not constitute a limitation on this embodiment of this application. It should be noted that this embodiment of this application may be further applied to an electronic device in which three or more SIM cards are installed. For specific implementation, refer to the foregoing related descriptions. Details are not described herein again.

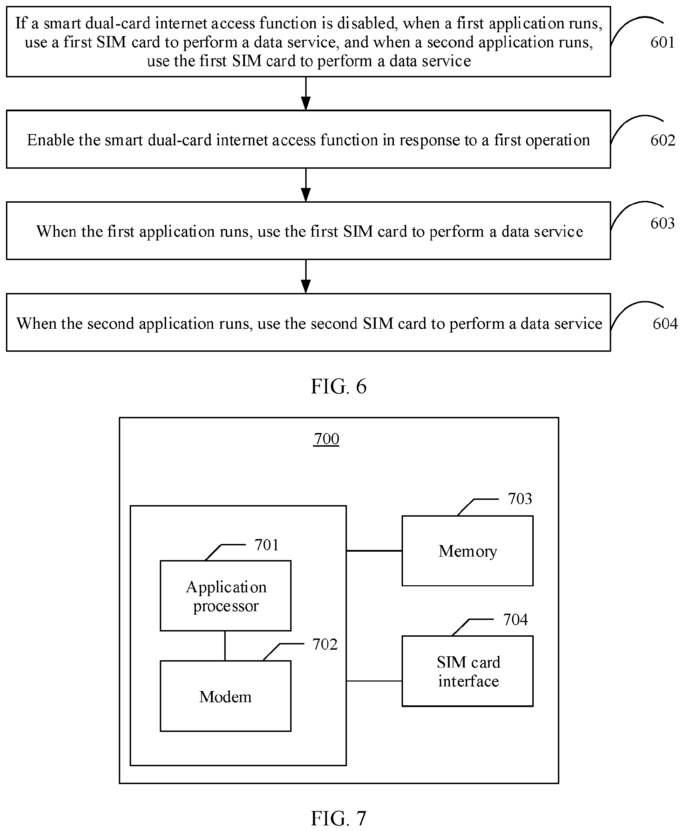

Based on the foregoing embodiments, an embodiment of this application provides an internet access method, applied to an electronic device. A first application and a second application are installed on the electronic device. The first application is associated with a first SIM card. The second application is associated with a second SIM card. The first SIM card is a default internet access card. As shown in FIG. 6, the method specifically includes the following steps.

Step 601: If a smart dual-card internet access function is disabled, when the first application runs, use the first SIM card to perform a data service, and when the second application runs, use the first SIM card to perform a data service.

The using the first SIM card to perform a data service when the first application runs may be understood as: When the first application runs, data communication is performed for internet access through a data connection established based on the first SIM card. For descriptions of using the second SIM card to perform a data service when the second application runs, refer to related descriptions of using the first SIM card to perform a data service when the first application runs. Details are not described herein again.

Step 602: Enable the smart dual-card internet access function in response to a first operation, so that the smart dual-card internet access function is enabled.

Step 603: When the first application runs, use the first SIM card to perform a data service.

Step 604: When the second application runs, use the second SIM card to perform a data service.

It should be noted that there is no necessary sequence between step 603 and step 604. Step 603 may be performed before step 604, or may be performed after step 604, or may be performed simultaneously. This is not limited.

In some embodiments, the second application is set as an application that preferentially uses the second SIM card for internet access. The first application is not set as an application that preferentially uses the second SIM card for internet access.

In addition, when a third application is further installed on the electronic device, if the smart dual-card internet access function is enabled, the third application is not associated with the first SIM card and the second SIM card. When the third application runs, the first SIM card is used to perform a data service. Further, the third application is not set as an application that preferentially uses the second SIM card for internet access.

In some embodiments, when a fourth application is further installed on the electronic device, the fourth application is associated with the first SIM card, and the fourth application is set as an application that preferentially uses the second SIM card for internet access. If the smart dual-card internet access function is enabled, when the fourth application runs, the second SIM card is used to perform a data service.

In still some embodiments, when a fifth application is further installed on the electronic device, the fifth application is associated with the second SIM card, and the fifth application is not set as an application that preferentially uses the second SIM card for internet access. If the smart dual-card internet access function is enabled, when the fifth application runs, the first SIM card is used to perform a data service.

In still some embodiments, when a sixth application is further installed on the electronic device, the sixth application is not associated with the first SIM card and the second SIM card, and the sixth application is set as an application that preferentially uses the second SIM card for internet access. If the smart dual-card internet access function is enabled, when the sixth application runs, the second SIM card is used to perform a data service.

It should be further noted that, for specific implementations of the internet access method shown in FIG. 6, refer to the foregoing related descriptions. Details are not described herein again.

In some other embodiments, the internet access method in this embodiment of this application may be further applied to an electronic device. A first application and a second application are installed on the electronic device. A first SIM card and a second SIM card are installed in the electronic device. The second application is set as an application that preferentially uses the second SIM card for internet access. The first application is not set as an application that preferentially uses the second SIM card for internet access. The first SIM card is a default internet access card. For specific steps, refer to the steps shown in FIG. 6. Details are not described herein again.

It may be understood that, in the foregoing method for implementing, by setting an application that preferentially uses the second SIM card for internet access, internet access of different applications on the electronic device based on different SIM cards, data packages purchased for the accounts identified by the IMSIs of the first SIM card and the second SIM card may not be limited. For example, the internet access method may be applied to the following scenario: data packages separately purchased by the user for the accounts identified by the IMSIs of the SIM card 1 and the SIM card 2 may be dedicated data packages for applications of different developers. Alternatively, data packages separately purchased by the user for the accounts identified by the IMSIs of the SIM card 1 and the SIM card 2 may be dedicated data packages for applications of a same developer, but the dedicated data packages for the applications of the same developer may further include general data traffic with different limits based on different prices. For example, a limit of general data traffic included in a dedicated data package priced at CNY 19 for the applications of Tencent is 1 GB. When usage of the general data traffic exceeds 1 GB, charging is performed based on a data traffic unit price. A limit of general data traffic included in a dedicated data package priced at CNY 29 for the applications of Tencent is 5 GB. When usage of the general data traffic exceeds 5 GB, charging is performed based on a data traffic unit price. Alternatively, data packages separately purchased by the user for the accounts identified by the IMSIs of the SIM card 1 and the SIM card 2 are all general data packages. Alternatively, a data package purchased by the user for the account identified by the IMSI of the SIM card 1 is a general data package, and a data package purchased by the user for the account identified by the IMSI of the SIM card 2 is a dedicated data package for some specific applications. Alternatively, a data package purchased by the user for the account identified by the IMSI of the SIM card 1 is a dedicated data package for some specific applications, and a data package purchased by the user for the account identified by the IMSI of the SIM card 2 is a general data package for some specific applications.

In addition, in this embodiment of this application, a same application may simultaneously use a plurality of SIM cards for internet access, or simultaneously use a wireless communication module and at least one SIM card for internet access. This helps improve an internet access rate.

It should be further noted that this embodiment of this application may be further applied to an electronic device that supports dual Wi-Fi networks. For example, if a wireless communication module of the electronic device supports Wi-Fi networks in a 2.4 GHz frequency band and a 5 GHz frequency band, the user may set, on the electronic device, an application that preferentially uses the 5 GHz frequency band, so that when a smart dual-band Wi-Fi network is enabled, the application that is set to preferentially use the 5 GHz frequency band may use a 5 GHz Wi-Fi network for internet access. Applications that are not set to preferentially use the 5 GHz frequency band use a 2.4 GHz Wi-Fi network for internet access. This helps implement internet access of different applications by using the Wi-Fi networks in different frequency bands.

A manner of setting the application that preferentially uses the 5 GHz frequency band is similar to a manner of setting the application that preferentially uses the SIM card 2. Details are not described herein again.

The foregoing embodiments may be used separately, or may be used in combination to achieve different technical effects.

In the foregoing embodiments provided in this application, the method provided in embodiments of this application is described from a perspective of a mobile phone serving as an execution body. To implement the functions in the method provided in embodiments of this application, the mobile phone may include a hardware structure and/or a software module, and the foregoing functions are implemented in a form of the software module or a combination of the hardware structure and the software module. Whether a function in the foregoing functions is performed by using the hardware structure, the software module, or the combination of the hardware structure and the software module depends on particular applications and design constraints of the technical solutions.

For example, as shown in FIG. 7, an embodiment of this application discloses an electronic device 700. The electronic device 700 may include an application processor 701, a modem 702, a memory 703, and a SIM card interface 704. The memory 703 stores program instructions. When the SIM card interface 704 is connected to a first SIM card and a second SIM card, and the first SIM card is a default internet access card, the application processor 701 is configured to invoke the program instructions to perform the following steps:
when a first application runs, controlling the modem 702 to use the second SIM card to perform a data service, and when a second application runs, controlling the modem 702 to use the first SIM card to perform a data service, where the first application is associated with the first SIM card, and the second application is associated with the second SIM card; and
enabling a smart dual-card internet access function in response to a first operation, if the smart dual-card internet access function is enabled, when the first application runs, controlling the modem 702 to use the first SIM card to perform a data service, and when the second application runs, controlling the modem 702 to use the second SIM card to perform a data service.

The modem 702 is configured to use the first SIM card and/or the second SIM card to perform a data service.

In some embodiments, the first application is not set as an application that preferentially uses the second SIM card for internet access. The second application is set as an application that preferentially uses the second SIM card 2 for internet access.

In some embodiments, the application processor 701 is further configured to invoke the program instructions stored in the memory 703 to perform the following steps:

In response to a user operation of starting the second application, the user is prompted that the second application is set to preferentially use the second SIM card for internet access and whether to continue to switch to the second SIM card. In response to a user operation of agreeing to switch to the second SIM card, it is determined to control the modem 702 to use the second SIM card to perform the data service when the second application runs.

In some embodiments, if a smart dual-card internet access function is enabled, the application processor 701 is further configured to invoke the program instructions stored in the memory 703 to perform the following steps:
when the third application runs, controlling the modem 702 to use the first SIM card to perform a data service, where the third application is not associated with the first SIM card and the second SIM card.

In some embodiments, the third application is not set as an application that preferentially uses the second SIM card for internet access.

In some embodiments, the application processor 701 is further configured to invoke the program instructions stored in the memory 703 to perform the following steps:
if a default internet access card smart switching function is enabled, when the modem 702 detects that network signal strength of the second SIM card is greater than network signal strength of the first SIM card, switching the default internet access card to the second SIM card; and
if the smart dual-card internet access function is enabled, when the third application runs, controlling the modem 702 to switch the third application to the second SIM card to perform a data service.

In some embodiments, if the smart dual-card internet access function is enabled, the application processor 701 is further configured to invoke the program instructions in the memory 703 to perform the following steps:
when a fourth application runs, using the second SIM card to perform a data service;
when a fifth application runs, using the first SIM card to perform a data service; and
when a sixth application runs, using the second SIM card to perform a data service.

The fourth application is associated with the first SIM card. The fourth application is set as an application that preferentially uses the second SIM card for internet access. The fifth application is associated with the second SIM card. The fifth application is not set as an application that preferentially uses the second SIM card for internet access. The sixth application is not associated with the first SIM card and the second SIM card. The sixth application is set as an application that preferentially uses the second SIM card for internet access.

In some embodiments, the application processor 701 is further configured to invoke the program instructions stored in the memory 703 to perform the following steps:
when the modem 702 detects that the second SIM card is disconnected from a network, switching the second application to the first SIM card, and controlling the modem 702 to use the first SIM card to perform a data service when the second application runs.

In some embodiments, the application processor 701 is further configured to invoke the program instructions stored in the memory 703 to perform the following steps:
after the second application is switched to the first SIM card, prompting the user that the second application is switched to the first SIM card.

In some embodiments, the application processor 701 is further configured to invoke the program instructions stored in the memory 703 to perform the following steps:
if the smart dual-card internet access function is enabled, when the modem 702 detects that the second SIM card restores a proper connection to the network, switching the second application to the second SIM card.

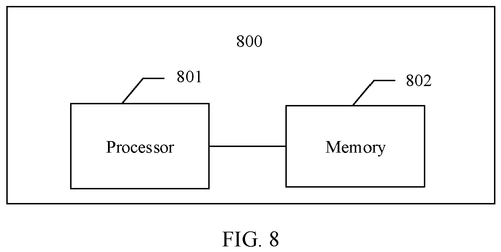

For another example, FIG. 8 is a schematic diagram of a structure of another electronic device according to an embodiment of this application. The electronic device 800 includes one or more processors 801, a memory 802, and a plurality of applications (for example, the first application and the second application). The foregoing components may be connected through one or more communication buses. The memory 802 stores program instructions. The program instructions are executed by the one or more processors 801. When the first SIM card and the second SIM card are installed on the electronic device 800, the first application is associated with the first SIM card, and the second application is associated with the second SIM card, the internet access method shown in FIG. 6 in this embodiment of this application is implemented.

The processor in the foregoing embodiments may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

Specifically, for specific implementations of the electronic device 700 and the electronic device 800, refer to related descriptions in the method part. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

## Claims

1. An internet access method, applied to an electronic device (700, 800), wherein when a first application and a second application are installed on the electronic device, and a first subscriber identity module SIM card and a second SIM card are installed in the electronic device, the first application is associated with the first SIM card, the second application is associated with the second SIM card, and the first SIM card is a default internet access card; and the method comprises:
if a smart dual-card internet access function is disabled, when the first application runs, using (601) the first SIM card to perform a data service, and when the second application runs, using (601) the first SIM card to perform a data service;
enabling (602) the smart dual-card internet access function in response to a first operation; and
if the smart dual-card internet access function is enabled, when the first application runs, using (603) the first SIM card to perform a data service, and when the second application runs, using (604) the second SIM card to perform a data service;
wherein the second application is set as an application that preferentially uses the second SIM card for internet access; and
**characterized in that**,
when it is detected that the second SIM card is disconnected from a network:
when a network fault switchover mode of the second SIM card is set to a first option, automatically switching the second application to the first SIM card, and using the first SIM card to perform a data service when the second application runs;
when the network fault switchover mode of the second SIM card is set to a second option, prompting a user that the second SIM card is disconnected from the network, and whether to switch the second application to the first SIM card; and
when the network fault switchover mode is set to a third option, disconnecting the second application from the network.

2. The method according to claim 1, wherein the first application is not set as an application that preferentially uses the second SIM card for internet access.

3. The method according to claim 2, wherein the method further comprises:
in response to a user operation of starting the second application, prompting the user that the second application is set to preferentially use the second SIM card for internet access and whether to continue to switch to the second SIM card; and
in response to a user operation of agreeing to switch to the second SIM card, determining to use the second SIM card to perform the data service when the second application runs.

4. The method according to any one of claims 1 to 3, wherein when a third application is further installed on the electronic device (700, 800), the third application is not associated with the first SIM card and the second SIM card; and the method further comprises:
if the smart dual-card internet access function is enabled, when the third application runs, using the first SIM card to perform a data service.

5. The method according to claim 4, wherein the third application is not set as an application that preferentially uses the second SIM card for internet access.

6. The method according to claim 4 or 5, wherein the method further comprises:
if a default internet access card smart switching function is enabled, when it is detected that network signal strength of the second SIM card is greater than network signal strength of the first SIM card, switching the default internet access card to the second SIM card; and
if the smart dual-card internet access function is enabled, when the third application runs, switching the third application to the second SIM card to perform a data service.

7. The method according to claim 6, wherein the switching the default internet access card to the second SIM card when it is detected that network signal strength of the second SIM card is greater than network signal strength of the first SIM card comprises:
when it is detected that the network signal strength of the second SIM card is greater than the network signal strength of the first SIM card, prompting the user whether to switch the default internet access card to the second SIM card; and
in response to a user operation of agreeing to switch the default internet access card to the second SIM card, switching the default internet access card to the second SIM card.

8. The method according to claim 2, wherein when a fourth application, a fifth application, and/or a sixth application are/is further installed on the electronic device (700, 800), the fourth application is associated with the first SIM card, the fourth application is set as an application that preferentially uses the second SIM card for internet access, the fifth application is associated with the second SIM card, the fifth application is not set as an application that preferentially uses the second SIM card for internet access, the sixth application is not associated with the first SIM card and the second SIM card, and the sixth application is set as an application that preferentially uses the second SIM card for internet access; and the method further comprises:
if the smart dual-card internet access function is enabled, when the fourth application runs, using the second SIM card to perform a data service, when the fifth application runs, using the first SIM card to perform a data service, and when the sixth application runs, using the second SIM card to perform a data service.

9. An electronic device (700), comprising an application processor (701), a modem (702), a memory (703), and a subscriber identity module SIM card interface (704), wherein the SIM card interface is connected to the first SIM card and the second SIM card, and the first SIM card is a default internet access card;
the memory (703) stores program instructions;
the application processor (701) is configured to invoke the program instructions to perform the method according to any one of claims 1 to 8.

10. A computer-readable storage medium, wherein the computer-readable storage medium comprises program instructions, and when the program instructions are run on an electronic device (700, 800), the electronic device is enabled to perform the method according to any one of claims 1 to 8.

11. A computer program product comprising instructions to cause the electronic device of claim 9 to perform the method according to any one of claims 1 to 8.

## Patentansprüche

1. Internetzugriffsverfahren, das auf eine elektronische Vorrichtung (700, 800) angewendet wird, wobei, wenn eine erste Anwendung und eine zweite Anwendung auf der elektronischen Vorrichtung installiert sind und eine erste Subscriber-Identity-Module-(SIM-)Karte und eine zweite SIM-Karte in der elektronischen Vorrichtung installiert sind, die erste Anwendung der ersten SIM-Karte zugeordnet ist, die zweite Anwendung der zweiten SIM-Karte zugeordnet ist und die erste SIM-Karte eine Standard-Internetzugriffskarte ist; und das Verfahren Folgendes umfasst:
wenn eine intelligente Zweikarten-Internetzugriffsfunktion deaktiviert ist, wenn die erste Anwendung läuft, Verwenden (601) der ersten SIM-Karte, um einen Datendienst durchzuführen, und wenn die zweite Anwendung läuft, Verwenden (601) der ersten SIM-Karte, um einen Datendienst durchzuführen;
Aktivieren (602) der intelligenten Zweikarten-Internetzugriffsfunktion als Reaktion auf eine erste Operation; und
wenn die intelligente Zweikarten-Internetzugriffsfunktion aktiviert ist, wenn die erste Anwendung läuft, Verwenden (603) der ersten SIM-Karte, um einen Datendienst durchzuführen, und wenn die zweite Anwendung läuft, Verwenden (604) der zweiten SIM-Karte, um einen Datendienst durchzuführen;
wobei die zweite Anwendung als eine Anwendung eingestellt ist, welche die zweite SIM-Karte bevorzugt für den Internetzugriff verwendet; und
**dadurch gekennzeichnet, dass**,
wenn erkannt wird, dass die zweite SIM-Karte von einem Netzwerk getrennt ist:
wenn ein Netzwerkfehler-Umschaltmodus der zweiten SIM-Karte auf eine erste Option eingestellt ist, automatisches Umschalten der zweiten Anwendung auf die erste SIM-Karte und Verwenden der ersten SIM-Karte, um einen Datendienst durchzuführen, wenn die zweite Anwendung läuft;
wenn der Netzwerkfehler-Umschaltmodus der zweiten SIM-Karte auf eine zweite Option eingestellt ist, Hinweisen eines Benutzers darauf, dass die zweite SIM-Karte vom Netzwerk getrennt ist, und ob die zweite Anwendung auf die erste SIM-Karte umgeschaltet werden soll; und
wenn der Netzwerkfehler-Umschaltmodus auf eine dritte Option eingestellt ist, Trennen der zweiten Anwendung vom Netzwerk.

2. Verfahren nach Anspruch 1, wobei die erste Anwendung nicht als eine Anwendung eingestellt ist, welche die zweite SIM-Karte bevorzugt für den Internetzugriff verwendet.

3. Verfahren nach Anspruch 2, wobei das Verfahren ferner Folgendes umfasst:
als Reaktion auf eine Benutzeroperation des Startens der zweiten Anwendung, Hinweisen des Benutzers darauf, dass die zweite Anwendung eingestellt ist, die zweite SIM-Karte bevorzugt für den Internetzugriff zu verwenden, und ob weiter auf die zweite SIM-Karte umgeschaltet werden soll; und
als Reaktion auf eine Benutzeroperation des Zustimmens zum Umschalten auf die zweite SIM-Karte, Bestimmen, die zweite SIM-Karte zu verwenden, um den Datendienst durchzuführen, wenn die zweite Anwendung läuft.

4. Verfahren nach einem der Ansprüche 1 bis 3, wobei, wenn ferner eine dritte Anwendung auf der elektronischen Vorrichtung (700, 800) installiert ist, die dritte Anwendung nicht der ersten SIM-Karte und der zweiten SIM-Karte zugeordnet ist; und das Verfahren ferner Folgendes umfasst:
wenn die intelligente Zweikarten-Internetzugriffsfunktion aktiviert ist, wenn die dritte Anwendung läuft, Verwenden der ersten SIM-Karte, um einen Datendienst durchzuführen.

5. Verfahren nach Anspruch 4, wobei die dritte Anwendung nicht als eine Anwendung eingestellt ist, welche die zweite SIM-Karte bevorzugt für den Internetzugriff verwendet.

6. Verfahren nach Anspruch 4 oder 5, wobei das Verfahren ferner Folgendes umfasst:
wenn eine intelligente Standard-Internetzugriffskarten-Umschaltfunktion aktiviert ist, wenn erkannt wird, dass eine Netzwerksignalstärke der zweiten SIM-Karte größer ist als eine Netzwerksignalstärke der ersten SIM-Karte, Umschalten der Standard-Internetzugriffskarte auf die zweite SIM-Karte; und
wenn die intelligente Zweikarten-Internetzugriffsfunktion aktiviert ist, wenn die dritte Anwendung läuft, Umschalten der dritten Anwendung auf die zweite SIM-Karte, um einen Datendienst durchzuführen.

7. Verfahren nach Anspruch 6, wobei das Umschalten der Standard-Internetzugriffskarte auf die zweite SIM-Karte, wenn erkannt wird, dass die Netzwerksignalstärke der zweiten SIM-Karte größer ist als die Netzwerksignalstärke der ersten SIM-Karte, Folgendes umfasst:
wenn erkannt wird, dass die Netzwerksignalstärke der zweiten SIM-Karte größer ist als die Netzwerksignalstärke der ersten SIM-Karte, Fragen des Benutzers, ob die Standard-Internetzugriffskarte auf die zweite SIM-Karte umgeschaltet werden soll; und
als Reaktion auf eine Benutzeroperation des Zustimmens zum Umschalten der Standard-Internetzugriffskarte auf die zweite SIM-Karte, Umschalten der Standard-Internetzugriffskarte auf die zweite SIM-Karte.

8. Verfahren nach Anspruch 2, wobei, wenn ferner eine vierte Anwendung, eine fünfte Anwendung und/oder eine sechste Anwendung auf der elektronischen Vorrichtung (700, 800) installiert sind/ist, die vierte Anwendung der ersten SIM-Karte zugeordnet ist, die vierte Anwendung als eine Anwendung eingestellt ist, welche die zweite SIM-Karte bevorzugt für den Internetzugriff verwendet, die fünfte Anwendung der zweiten SIM-Karte zugeordnet ist, die fünfte Anwendung nicht als eine Anwendung eingestellt ist, welche die zweite SIM-Karte bevorzugt für den Internetzugriff verwendet, die sechste Anwendung nicht der ersten SIM-Karte und der zweiten SIM-Karte zugeordnet ist und die sechste Anwendung als eine Anwendung eingestellt ist, welche die zweite SIM-Karte bevorzugt für den Internetzugriff verwendet; und das Verfahren ferner Folgendes umfasst:
wenn die intelligente Zweikarten-Internetzugriffsfunktion aktiviert ist, wenn die vierte Anwendung läuft, Verwenden der zweiten SIM-Karte, um einen Datendienst durchzuführen, wenn die fünfte Anwendung läuft, Verwenden der ersten SIM-Karte, um einen Datendienst durchzuführen, und wenn die sechste Anwendung läuft, Verwenden der zweiten SIM-Karte, um einen Datendienst durchzuführen.

9. Elektronische Vorrichtung (700), umfassend einen Anwendungsprozessor (701), ein Modem (702), einen Speicher (703) und eine Subscriber-Identity-Module-(SIM-)Kartenschnittstelle (704), wobei die SIM-Kartenschnittstelle mit der ersten SIM-Karte und der zweiten SIM-Karte verbunden ist und die erste SIM-Karte eine Standard-Internetzugriffskarte ist; wobei der Speicher (703) Programmanweisungen speichert;
der Anwendungsprozessor (701) konfiguriert ist, um die Programmanweisungen aufzurufen, um das Verfahren nach einem der Ansprüche 1 bis 8 durchzuführen.

10. Computerlesbares Speichermedium, wobei das computerlesbare Speichermedium Programmanweisungen umfasst, und wenn die Programmanweisungen auf einer elektronischen Vorrichtung (700, 800) ausgeführt werden, der elektronischen Vorrichtung ermöglicht wird, das Verfahren nach einem der Ansprüche 1 bis 8 durchzuführen.

11. Computerprogrammprodukt, umfassend Anweisungen, um die elektronische Vorrichtung nach Anspruch 9 zu veranlassen, das Verfahren nach einem der Ansprüche 1 bis 8 durchzuführen.

## Revendications

1. Procédé d'accès à Internet, appliqué à un dispositif électronique (700, 800), dans lequel, lorsqu'une première application et une deuxième application sont installées sur le dispositif électronique, et qu'une première carte de module d'identification de l'abonné, SIM, et une seconde carte SIM sont installées dans le dispositif électronique, la première application est associée à la première carte SIM, la deuxième application est associée à la seconde carte SIM, et la première carte SIM est la carte d'accès Internet par défaut ; et le procédé comprend :
si une fonction d'accès Internet à double carte intelligente est désactivée, lorsque la première application s'exécute, l'utilisation (601) de la première carte SIM pour réaliser un service de données, et lorsque la deuxième application s'exécute, l'utilisation (601) de la première carte SIM pour réaliser un service de données ;
l'activation (602) de la fonction d'accès Internet à double carte intelligente en réponse à une première action ; et
si la fonction d'accès Internet à double carte intelligente est activée, lorsque la première application s'exécute, l'utilisation (603) de la première carte SIM pour réaliser un service de données, et lorsque la deuxième application s'exécute, l'utilisation (604) de la seconde carte SIM pour réaliser un service de données ;
dans lequel la deuxième application est définie comme une application qui utilise de préférence la seconde carte SIM pour un accès à Internet ; et
**caractérisé en ce que**,
lorsqu'il est détecté que la seconde carte SIM est déconnectée d'un réseau :
lorsqu'un mode de commutation en cas de panne réseau de la seconde carte SIM est défini sur une première option, la commutation automatique de la deuxième application vers la première carte SIM, et l'utilisation de la première carte SIM pour réaliser un service de données lorsque la deuxième application s'exécute ;
lorsque le mode de commutation en cas de panne réseau de la seconde carte SIM est défini sur une deuxième option, le fait d'indiquer à un utilisateur que la seconde carte SIM est déconnectée du réseau, et lui demander s'il souhaite passer la deuxième application vers la première carte SIM ; et
lorsque le mode de commutation en cas de panne réseau est défini sur une troisième option, la déconnexion de la deuxième application du réseau.

2. Procédé selon la revendication 1, dans lequel la première application n'est pas définie comme une application qui utilise de préférence la seconde carte SIM pour un accès à Internet.

3. Procédé selon la revendication 2, dans lequel le procédé comprend également :
en réponse à une action de l'utilisateur consistant à lancer la deuxième application, le fait d'indiquer à l'utilisateur que la deuxième application est définie pour utiliser de préférence la seconde carte SIM pour un accès à Internet et lui demander s'il souhaite continuer à passer vers la seconde carte SIM ; et
en réponse à une action de l'utilisateur consistant à accepter de passer à la seconde carte SIM, la détermination d'utiliser la seconde carte SIM pour réaliser le service de données lorsque la deuxième application s'exécute.

4. Procédé selon l'une quelconque des revendications 1 à 3, dans lequel, lorsqu'une troisième application est également installée sur le dispositif électronique (700, 800), la troisième application n'est associée ni à la première carte SIM ni à la seconde carte SIM ; et le procédé comprend également :
si la fonction d'accès Internet à double carte intelligente est activée, lorsque la troisième application s'exécute, l'utilisation de la première carte SIM pour réaliser un service de données.

5. Procédé selon la revendication 4, dans lequel la troisième application n'est pas définie comme une application qui utilise de préférence la seconde carte SIM pour un accès à Internet.

6. Procédé selon la revendication 4 ou 5, dans lequel le procédé comprend également :
si une fonction de commutation intelligente de la carte d'accès Internet par défaut est activée, lorsqu'il est détecté que la puissance du signal réseau de la seconde carte SIM est supérieure à la puissance du signal réseau de la première carte SIM, la commutation de la carte d'accès Internet par défaut vers la seconde carte SIM ; et
si la fonction d'accès Internet à double carte intelligente est activée, lorsque la troisième application s'exécute, la commutation de la troisième application vers la seconde carte SIM pour réaliser un service de données.

7. Procédé selon la revendication 6, dans lequel la commutation de la carte d'accès Internet par défaut vers la seconde carte SIM lorsqu'il est détecté que la puissance du signal réseau de la seconde carte SIM est supérieure à la puissance du signal réseau de la première carte SIM comprend :
lorsqu'il est détecté que la puissance du signal réseau de la seconde carte SIM est supérieure à la puissance du signal réseau de la première carte SIM, le fait d'indiquer à l'utilisateur s'il souhaite passer la carte d'accès Internet par défaut vers la seconde carte SIM ; et
en réponse à une action de l'utilisateur consistant à accepter de passer de la carte d'accès Internet par défaut vers la seconde carte SIM, la commutation de la carte d'accès Internet par défaut vers la seconde carte SIM.

8. Procédé selon la revendication 2, dans lequel, lorsqu'une quatrième application, une cinquième application, et/ou une sixième application sont également installées sur le dispositif électronique (700, 800), la quatrième application est associée à la première carte SIM, la quatrième application est définie comme une application qui utilise de préférence la seconde carte SIM pour un accès à Internet, la cinquième application est associée à la seconde carte SIM, la cinquième application n'est pas définie comme une application qui utilise de préférence la seconde carte SIM pour l'accès à Internet, la sixième application n'est associée ni à la première carte SIM ni à la seconde carte SIM, et la sixième application est définie comme une application qui utilise de préférence la seconde carte SIM pour un accès à Internet ; et le procédé comprend également :
si la fonction d'accès Internet à double carte intelligente est activée, lorsque la quatrième application s'exécute, l'utilisation de la seconde carte SIM pour réaliser un service de données, lorsque la cinquième application s'exécute, l'utilisation de la première carte SIM pour réaliser un service de données, et lorsque la sixième application s'exécute, l'utilisation de la seconde carte SIM pour réaliser un service de données.

9. Dispositif électronique (700), comprenant un processeur d'application (701), un modem (702), une mémoire (703), et une interface de carte de module d'identification de l'abonné, SIM (704), dans lequel l'interface de carte SIM est connectée à la première carte SIM et à la seconde carte SIM, et la première carte SIM est une carte d'accès Internet par défaut ;
la mémoire (703) stocke les instructions du programme ;
le processeur d'application (701) est configuré pour appeler les instructions de programme à réaliser le procédé selon l'une quelconque des revendications 1 à 8.

10. Support de stockage lisible par ordinateur, dans lequel le support de stockage lisible par ordinateur comprend des instructions de programme, et lorsque les instructions de programme sont exécutées sur un dispositif électronique (700, 800), le dispositif électronique est activé pour réaliser le procédé selon l'une quelconque des revendications 1 à 8.

11. Produit de programme informatique comprenant des instructions pour amener le dispositif électronique selon la revendication 9 à réaliser le procédé selon l'une quelconque des revendications 1 à 8.
